(19) Europäisches Patentamt
European Patent Office
Office européen des brevets

(11) Veröffentlichungsnummer: **0 521 900 B1**

(12) **EUROPÄISCHE PATENTSCHRIFT**

(45) Veröffentlichungstag der Patentschrift: **25.01.95**

(51) Int. Cl.$^6$: **C09J 4/04**, C08B 37/00

(21) Anmeldenummer: **91905771.1**

(22) Anmeldetag: **18.03.91**

(86) Internationale Anmeldenummer:
**PCT/EP91/00517**

(87) Internationale Veröffentlichungsnummer:
**WO 91/14749 (03.10.91 91/23)**

(54) **-g(a)-CYANACRYLATKLEBSTOFFZUSAMMENSETZUNGEN.**

(30) Priorität: **26.03.90 DE 4009621**

(43) Veröffentlichungstag der Anmeldung:
**13.01.93 Patentblatt 93/02**

(45) Bekanntmachung des Hinweises auf die Patenterteilung:
**25.01.95 Patentblatt 95/04**

(84) Benannte Vertragsstaaten:
**AT BE CH DE DK ES FR GB IT LI LU NL SE**

(56) Entgegenhaltungen:
**EP-A- 0 121 777**
**WO-A-89/09235**
**GB-A- 2 200 909**
**US-A- 3 459 732**

(73) Patentinhaber: **Henkel Kommanditgesellschaft auf Aktien**

**D-40191 Düsseldorf (DE)**

Patentinhaber: **Max-Planck-Gesellschaft zur Förderung der Wissenschaften e.V.**
**Bunsenstrasse 10**
**D-37073 Göttingen (DE)**

(72) Erfinder: **WENZ, Gerhard**
**Merkurweg 13**
**D-6500 Mainz 21 (DE)**
Erfinder: **ENGELSKIRCHEN, Konrad**
**Gonellastrasse 24**
**D-4005 Meerbusch (DE)**
Erfinder: **FISCHER, Herbert**
**Neustädter Weg 29**
**D-4000 Düsseldorf 1 (DE)**
Erfinder: **NICOLAISEN, Heinz, Christian**
**Ossietzkyring 4**
**D-3000 Hannover 91 (DE)**
Erfinder: **HARRIS, Steven**
**10 Broadford Crescent**
**Ballinteer,**
**Dublin 16 (IE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung liegt auf dem Gebiet der Klebstoffe und betrifft schnell abbindende Klebstoffzusammensetzungen auf Basis von α-Cyanacrylaten, die in diesen Cyanacrylaten zumindest partiell lösliche Derivate von α-, β- und/oder γ-Cyclodextrinen enthalten.

Klebstoffzusammensetzungen auf Basis von α-Cyanacrylaten vermögen innerhalb kürzester Zeit auszuhärten und eignen sich hervorragend zur Verklebung einer Vielzahl von Materialien. Die Aushärtung dieser Cyanacrylatklebstoffe erfolgt im allgemeinen durch anionische Polymerisation, die bereits durch geringe Spuren auch schwacher Basen, wie Wasser oder Methanol, ausgelöst wird. Problematisch ist die Verwendung dieser Klebstoffe beim Verkleben von porösen Materialien und beim Verkleben von Substraten mit sauer reagierenden Oberflächen, die die anionische Polymerisation des α-Cyanacrylats inhibieren. So sind beispielsweise beim Verkleben von cellulosehaltigen Materialien Abbindezeiten von bis zu 20 Minuten erforderlich, abgesehen davon, daß die Klebfestigkeit der verbundenen Materialien oft nicht zufriedenstellend ist.

Durch verschiedene Maßnahmen ist nun versucht worden, eine Verkürzung der Abbindezeiten auch für die problematisch zu verklebenden Materialien zu erreichen.

Aus der deutschen Offenlegungsschrift 28 16 836 sind α-Cyanacrylatklebstoffe mit verkürzten Abbindezeiten bekannt, die als Abbindebeschleuniger mindestens eine makrocyclische Polyetherverbindung (Kronenether), ausgewählt aus der Gruppe der makrocyclischen Polyether und ihrer Analogen, enthalten. In der europäischen Patentanmeldung EP-A-142 347 wird vorgeschlagen, Siliciumatome enthaltende Kronenverbindungen in Mengen von 0,1 bis 5 % als Beschleuniger zu den Cyanacrylaten zu geben. Diese Klebstoffzusammensetzungen weisen jedoch einige negative Eigenschaften auf, wie z.B. verbesserungsbedürftige Lagerstabilitäten.

Aufgabe der vorliegenden Erfindung war es daher, andere Zusätze zu finden, die die Abbindezeiten der Cyanacrylate erheblich verkürzen, ohne deren Lagerfähigkeit negativ zu beeinflussen.

Überraschenderweise wurde nun gefunden, daß der Zusatz an Derivaten von α-, β- und/oder γ-Cyclodextrinen, die in α-Cyanacrylaten zumindest partiell löslich sind, die Abbindezeiten von Klebstoffzusammensetzungen auf Basis von α-Cyanacrylaten erheblich werkürzen, ohne die Lagerstabilität negativ zu beeinflussen.

Gegenstand der vorliegenden Erfindung sind demnach Klebstoffzusammensetzungen auf Basis von α-Cyanacrylaten und Abbindebeschleunigern, dadurch gekennzeichnet, daß die Klebstoffzusammensetzung in α-Cyanacrylate zumindest in Mengen von über 0,001 Gew.-% echt lösliche Hydroxylgruppen-Derivate von α-, β-und/oder γ-Cyclodextrinen enthält, und zwar in Mengen von 0,001 bis 5 Gew.-%, bezogen auf die Klebstoffzusammensetzung.

Unter "Hydroxylgruppen-Derivaten" werden hier ausschließlich solche Derivate verstanden, bei denen eine oder mehrere der in Cyclode trinen vorhandenen freien Hydroxylgruppen umgesetzt worden sind Die erfindungsgemäßen Klebstoffe enthalten als Hauptkomponente α-Cyanacrylatmonomere, die Veresterungsprodukte der α-Cyanacrylsäure mit einem Alkohol ROH darstellen, wobei R eine geradkettige oder verzweigtkettige Alkylgruppe mit 1 bis 12 Kohlenstoffatomen, die mit einem Halogenatom oder einer Alkoxygruppe substituiert sein kann, eine geradkettige oder verzweigte Alkenylgruppe mit 2 bis 12 Kohlenstoffatomen, eine geradkettige oder verzweigte Alkinylgruppe mit 2 bis 12 Kohlenstoffatomen, eine Cycloalkylgruppe, eine Aralkylgruppe oder einer Arylgruppe bedeuten kann. Im Rahmen der Erfindung werden solche Cyanacrylate bevorzugt, in der R für eine Methylgruppe, Ethylgruppe, n-Propylgruppe, Isopropylgruppe, n-Butylgruppe, Isobutylgruppe, Pentylgruppe, Hexylgruppe, Allylgruppe, Methallylgruppe, Crotylgruppe, Propargylgruppe, Cyclohexylgruppe, Benzylgruppe, Phenylgruppe, Kresylgruppe, 2-Chlorethylgruppe, 3-Chlorpropylgruppe, 2-Chlorbutylgruppe, Trifluorethylgruppe, 2-Methoxyethylgruppe, 3-Methoxybutylgruppe und 2-Ethoxyethylgruppe steht.

Die nach der vorliegenden Erfindung eingesetzten α-Cyanacrylate können ein einziges α-Cyanacrylatmonomer sein oder eine Mischung von zwei oder mehreren α-Cyanacrylatmonomeren.

Die erfindungsgemäßen Klebstoffzusammensetzungen enthalten die α-Cyanoacrylatmonomere als Hauptbestandteil, vorzugsweise in Mengen von 70 bis 99,9 Gew.-% und insbesondere in Mengen von 80 bis 99,5 Gew.-% - bezogen auf das Gesamtgewicht der Klebstoffzusammensetzung.

Erfindungsgemäß enthält die Klebstoffzusammensetzung als weiteren Bestandteil Hydroxylgruppen-Derivate von α-, β- und/oder γ-Cyclodextrinen, die in α-Cyanacrylaten zumindest in Mengen von über 0,001 Gew.-% echt löslich sind.

Die erfindungsgemäßen Klebstoffzusammensetzungen enthalten die zumindest partiell in α-Cyanacrylaten löslichen Hydroxylgruppen-Derivate von α-, β- und/oder γ-Cyclodextrinen in Mengen von 0,001 Gew.-% bis 5 Gew.-% und vorzugsweise in Mengen bis zu 3 Gew.-% - bezogen auf Klebstoffzusammensetzung. Im

Sinne der Erfindung werden diejenigen Hydroxylgruppen-Derivate von α-, β- und/oder γ-Cyclodextrinen als zumindest partiell löslich in α-Cyanacrylaten bezeichnet, die wenigstens in Mengen von über 0,001 Gew.-% in α-Cyanacrylaten echt gelöst enthalten sind. Vorzugsweise enthalten die erfindungsgemäßen Klebstoffzusammensetzungen die Derivate von α-, β- und/oder γ-Cyclodextrinen in Mengen von 0,005 Gew.-% bis 1 Gew.-%, bevorzugt von 0,01 bis 0,5 Gew.-% und insbesondere in Mengen von 0,03 bis 0,3 Gew.-% - bezogen auf Klebstoffzusammensetzung - echt gelöst in α-Cyanacrylaten.

Zu den in α-Cyanacrylaten zumindest partiell löslichen Hydroxylgruppen-Derivaten von α-, β- und/oder γ-Cyclodextrinen zählen auch diejenigen, die erst bei erhöhten Temperaturen, jedoch unterhalb der Zersetzungs- bzw. Siedetemperatur der Komponenten, und/oder unter Mitverwendung eines Lösungsvermittlers wenigstens in Mengen von 0,001 Gew.-% in α-Cyanacrylaten gelöst werden. Als Lösungsvermittler können die dem Fachmann bekannten, z.B. Phthalate, Cyanessigsäureester u.ä. in Mengen zu 20 Gew.-% - berechnet auf Klebstoffzusammensetzung - eingesetzt werden.

Cyclodextrine sind cyclische, nichtreduzierende Oligosaccharide, die durch enzymatischen Abbau von Stärke gewonnen werden. Sie bestehen aus D-Glukoseeinheiten (Anhydroglukose), die über eine α-1.4-glykosidische Bindung verknüpft sind. Je nach Anzahl der Glucosemoleküle unterscheidet man zwischen α-, β- und γ-Cyclodextrin. α-Cyclodextrin besteht aus 6 Glukosemolekülen, die insgesamt 18 Hydroxylgruppen tragen. β-Cylodextrin besteht aus 7 Glukosemolekülen, die insgesamt 21 Hydroxylgruppen tragen und γ-Cyclodextrin besteht aus 8 Glukosemolekülen, die dementsprechend 24 Hydroxylgruppen tragen. Als Hydroxylgruppen-Derivate der α-, β- und/oder γ-Cyclodextrine werden hier ausschließlich Umsetzungsprodukte bezeichnet, bei denen eine chemische Umsetzung an zumindest einer Hydroxylgruppe stattgefunden hat. Je nach gewählten Umsetzungsbedingungen können die Hydroxylgruppen teilweise oder vollständig derivatisiert werden, wobei die cyclische Struktur der Cyclodextrine erhalten bleibt.

Erfindungsgemäß werden in α-Cyanacrylat zumindest teilweise lösliche Derivate von α-, β- und/oder γ-Cyclodextrinen eingesetzt, wobei die Hydroxylgruppen im statistischen Mittel in Derivatierungsgraden von 25 bis 100 %, vorzugsweise über 30 %, bevorzugt aber über 50 % und insbesondere über 60 % umgesetzt worden sind.

Der hier verwendete Ausdruck "im statistischen Mittel" umfaßt, daß nach der (Teil-)Derivatisierung der Cyclodextrine Produktgemische von Cyclodextrinen mit unterschiedlichen Derivatierungsgraden erhalten werden, in denen auch Anteile an Cyclodextrinderivaten enthalten sein können, die geringere oder höhere Derivatierungsgrade als das statistische Mittel aufweisen.

Im Sinne der Erfindung ist es jedoch vorteilhaft, nur geringe Anteile an Cyclodextrin-Derivaten mit einem Derivatierungsgrad von unter 25 % zu haben, da ansonsten keine ausreichende Löslichkeit in α-Cyanacrylaten mehr gewährleistet ist. Unter dem Derivatierungsgrad wird der Quotient von derivatisierten zu freien Hydroxylgruppen verstanden, der in Prozent angegeben wird.

Einer Ausführungsform der vorliegenden Erfindung entsprechend werden Derivate von α-, β- und/oder γ-Cyclodextrinen eingesetzt, deren Hydroxylgruppen durch Veretherung, Veresterung, Silylierung und/oder Urethanbildung derivatisiert worden sind.

Geeignete Derivate an α-, β- und/oder γ-Cyclodextrinen sind neben den Carbonaten der Cyclodextrine bevorzugt solche der allgemeinen Formel I

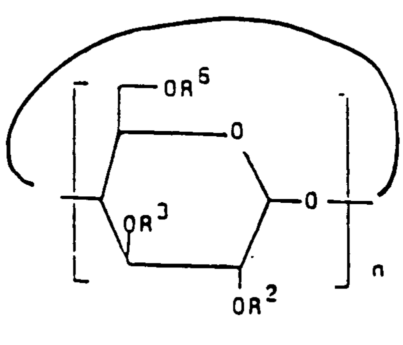

(I)

in der $R^2$, $R^3$ und $R^6$ gleich oder verschieden sind und Wasserstoff - ausgenommen Verbindungen, in der $R^2$, $R^3$ und $R^6$ Wasserstoffatome sind - und/oder eine Alkyl- und/oder eine Alkylen- und/oder eine Cycloalkyl- und/oder eine Alkylaryl- und/oder eine Acyl- und/oder eine Trialkylsilyl- und/oder eine Urethangruppe bedeuten und n die Zahl 6, 7 oder 8 ist.

Gegebenenfalls können die genannten Gruppen auch weitere Substituenten wie Halogene, Ether-, Ester- oder Alkoxygruppen tragen. Des weiteren können sich im Sinne der Erfindung die einzelnen Glukoseeinheiten der jeweiligen Cyclodextrine im Substitutionsmuster unterscheiden.

Vorzugsweise enthalten die erfindungsgemäßen Klebstoffzusammensetzungen Derivate von α-, β- und/oder γ-Cyclodextrinen der allgemeinen Formel I, in der die Reste $R^2$, $R^3$ und $R^6$ Wasserstoffatome - ausgenommen Verbindungen, in der $R^2$, $R^3$ und $R^6$ Wasserstoffatome sind - und/oder eine geradkettige oder verzweigte Alkyl- oder Alkenylgruppe mit bis zu 12 Kohlenstoffatomen und/oder eine Alkylarylgruppe mit bis zu 12 Kohlenstoffatomen und/oder eine Acylgruppe -C(O)-R' und/oder eine Urethangruppe -C(O)-$NR'_2$ und/oder eine Trialkylsilylgruppe -$SiR''_3$ bedeuten, wobei R' für ein Wasserstoffatom, eine geradkettige oder verzweigte Alkyl- oder Alkenyl- oder eine Cycloalkyl- oder eine Alkylarylgruppe mit bis zu 12 C-Atomen, die gegebenenfalls Substituenten wie Halogene, Ether-, Ester- oder Alkoxygruppen tragen können, und R'' für eine Alkylgruppe mit bis zu 6 C-Atomen steht.

Einer bevorzugten Ausführungsform der vorliegenden Erfindung entsprechend enthalten die Klebstoffzusammensetzungen sogenannte Mischderivate von α-, β- und/oder γ-Cyclodextrinen der allgemeinen Formel I, die sowohl eine der obengenannten Alkyl-, Alkylen-, Cycloalkyl- und/oder Alkylarylgruppe als einen Rest $R^2$, $R^3$ und $R^6$ als auch eine Acyl-, Trialkylsilyl-und/oder Urethangruppe als einen weiteren Rest $R^2$, $R^3$ und $R^6$ aufweisen.

Vorzugsweise enthalten die erfindungsgemäßen Klebstoffzusammensetzungen als Abbindebeschleuniger Mischderivate von α-, β-und/oder γ-Cyclodextrinen der allgemeinen Formel I, in der im statistischen Mittel zwei der Reste $R^2$, $R^3$ und $R^6$ eine geradkettige oder verzweigte Alkyl- oder Alkenylgruppe mit bis zu 12 Kohlenstoffatomen und/oder eine Cycloalkyl- und/oder eine Alkylarylgruppe mit bis zu 12 Kohlenstoffatomen und in der im statistischen Mittel einer der Reste eine Acyl- und/oder eine Urethangruppe -C(O)-$NR'_2$ bedeuten.

Bevorzugt sind Mischderivate von α-, β- und/oder γ-Cyclodextrinen der allgemeinen Formel I, in der im statistischen Mittel einer der Reste $R^2$, $R^3$ oder $R^6$ eine Acylgruppe -C(O)R' bedeutet, wobei R' für ein Wasserstoffatom, eine Alkyl-, Alkylen-, Cycloalkyl- oder Alkylarylgruppe mit bis zu 12 C-Atomen steht, und R' Halogene, Ether-, Ester- oder Alkoxygruppen als Substituenten tragen kann.

Insbesondere geeignet sind solche Mischderivate von Cyclodextrinen der allgemeinen Formel I, in der im statistischen Mittel Rest $R^3$ oder $R^6$, vorzugsweise $R^3$, eine Acylgruppe in der obengenannten Bedeutung sind und die übrigen Reste eine geradkettige Alkylgruppe mit bis zu 12 C-Atomen bedeuten. Und innerhalb der letzten Gruppe der Mischderivate werden vorzugsweise die der α- und/oder β-Cyclodextrine als Abbindebeschleuniger eingesetzt.

Die erfindungsgemäßen Klebstoffzusammensetzungen können ein einziges Hydroxylgruppen-Derivat der α-, β- und/oder γ-Cyclodextrine oder Mischungen von zwei oder mehreren Derivaten enthalten.

Die erfindungsgemäßen Klebstoffe können weitere übliche Zusätze wie anionische Polymerisationsinhibitoren und/oder Radikalpolymerisationsinhibitoren, Verdickungsmittel, Weichmacher, Wärmestabilisatoren sowie Farbstoffe, Pigmente und dergleichen als Hilfsmittel enthalten, vorzugsweise in Mengen von 0.001 bis 30 Gew.-%, bezogen auf Klebstoffzusammensetzung.

Zur Lagerstabilisierung können den erfindungsgemäßen Klebstoffen anionische Polymerisationsinhibitoren in Mengen von 1 bis 1 000 ppm, bezogen auf das Gesamtgewicht der Klebstoffzusammensetzung, zugesetzt werden. Als Beispiele derartiger Inhibitoren sind Schwefeldioxid, aromatische Sulfonsäuren, aliphatische Sulfonsäuren und Phosphorsäuren gängig. Geeignete Inhibitoren für die Radikalpolymerisation sind beispielsweise Hydrochinon und Hydrochinonmonomethylether, die in einer Menge von 1 bis 5 000 ppm, bezogen auf das Gesamtgewicht der Klebstoffzusammensetzung, zugegeben werden können. Zur Erhöhung der Viskosität der erfindungsgemäßen Klebstoffzusammensetzung können Verdickungsmittel zugegeben werden wie Cellulosederivate, Polyvinylacetate, Polymethylmethacrylate, Acrylkautschuke sowie Copolymere von Methacrylsäureestern. Die geeignete Menge an Verdickungsmittel richtet sich nach dem jeweiligen Verwendungszweck und der Klebstoffzusammensetzung.

Des weiteren können Weichmacher, Farbstoffe, Pigmente usw. zu dem erfindungsgemäßen Klebstoff zugegeben werden. Die Zugabemengen richten sich ebenfalls nach dem Verwendungszweck, sollten jedoch nach oben hin so begrenzt sein, daß die Stabilität bzw. die Klebfestigkeit der α-Cyanoacrylat-Klebstoffe nicht nachteilig beeinflußt werden.

Ein weiterer Gegenstand der vorliegenden Erfindung ist ein Verfahren zur Herstellung der erfindungsgemäßen Klebstoffzusammensetzung. Erfindungsgemäß werden die im Handel erhältlichen α-Cyanacrylate mit den Hydroxylgruppen-Derivaten von α-, β- und/oder γ-Cyclodextrinen unter intensivem Rühren oder Schütteln vermengt, wobei Temperaturerhöhung den Löseprozeß der Cyclodextrinderivate beschleunigen kann. Dabei sind die Temperaturen nach oben hin so begrenzen, daß Nebenreaktionen, z.B. die Zersetzung der Cyanacrylate, vermieden werden. Als besonders geeignetes Verfahren hat sich das automatische Schütteln dieser Derivate von α-, β- und/oder γ-Cyclodextrinen in Cyanacrylaten bei Raumtemperatur erwiesen, wobei gegebenenfalls weitere Zusätze sowohl vor als auch nach Zugabe der Cyclodextrinderivate zugesetzt werden können. In einer weiteren Ausgestaltung der vorliegenden Erfindung werden diese

Derivate der Cyclodextrine in einem mit Cyanacrylaten verträglichen Lösungsvermittler wie Phthalate oder α-Cyanessigsäurealkylester vorgelöst, bevor sie mit den Cyanacrylatmonomeren vermengt werden. Als vorteilhaft hat es sich erwiesen, die Hydroxylgruppen-Derivate der Cyclodextrine in dem jeweiligen α-Cyanacrylsäureester vorzulösen und die so erhaltene Stammlösung mit der restlichen benötigten Menge des jeweiligen Cyanacrylsäureesters zu vermengen.

Die erfindungsgemäßen Klebstoffzusammensetzungen auf Basis von α-Cyanacrylaten zeichnen sich insgesamt durch kurze Abbindezeiten sowie gute Lagerstabilitäten aus. Das schnelle Aushärten der erfindungsgemäßen Klebstoffzusammensetzung ermöglicht breite Anwendung, auch auf den problematischen Anwendungsgebieten zum Verkleben von porösen und/oder an der Oberfläche sauer reagierender Materialien wie Holz, Papier, Leder oder Textilien.

Beispiele

**A Derivatisierung der Cyclodextrine**

Beispiel 1

**Synthese von Heptakis(2,6-di-O-n-butyl)β-cyclodextrin**

18 g handelsübliches β-Cyclodextrin, das ca. 10 Gew.-% Wasser enthält, wurden in 400 ml vorgetrocknetem Dimethylsulfoxid gelöst. Zu der Lösung wurden zunächst unter Rühren 45,1 ml n-Brombutan und 16,8 g feingepulvertes Natriumhydroxid zugegeben und bei Raumtemperatur gerührt. Zur Vervollständigung der Reaktion wurden nach 24 bis 48 Stunden weitere 23 ml n-Brombutan sowie 8,4 g Natriumhydroxid eingerührt. Nach insgesamt 3- bis 4-tägigem Rühren des Reaktionsansatzes bei Raumtemperatur wurde die Vollständigkeit der Umsetzung mit Hilfe einer Dünnschichtchromatographie festgestellt. Als Laufmittel wurde eine Mischung von tert.-Butylmethylether und Petrolether im Verhältnis von 30 : 70 verwendet. Die Entwicklung der Dünnschichtchromatogramme erfolgte durch Eintauchen in eine Mischung von konzentrierter Schwefelsäure und Ethanol im Verhältnis 2 : 98. Der Rf-Wert betrug 0,3, der des β-Cyclodextrins O.

Die Aufarbeitung der Reaktionsmischung erfolgte durch Flüssig-Flüssig-Extraktion. Die Reaktionslösung wurde in 400 ml Wasser gegossen und zweimal mit je 300 ml tert.-Butylmethylether extrahiert. Die vereinigten Etherphasen wurden zweimal mit 500 ml Wasser und einmal mit 500 ml halbkonzentrierter Natriumchloridlösung gewaschen und im Vakuum eingeengt. Das so erhaltene Rohprodukt wurde zunächst durch Säulenchromatographie vorgereinigt und anschließend durch eine weitere Säulenchromatographie weiter gereinigt. Zur Vorreinigung wurde das Rohprodukt auf eine Säule (Durchmesser 7 cm, Höhe 45 cm), die mit 800 bis 1 000 g Kieselgel (Korngröße 0,063 mm bis 0,2 mm) beschickt war, bei einem Druck von 0,05 bis 0,1 bar unter Verwendung einer Mischung von Petrolether mit tert. -Butylmethylether im Verhältnis 70 : 30 als Laufmittel aufgetragen. Nach ca. 500 ml Vorlauf fiel das vorgereinigte Produkt als zweite Fraktion an. Dieses vorgereinigte Produkt wurde wiederum auf eine Säule (Durchmesser 6 cm, Höhe 60 bis 70 cm), beschickt mit 800 bis 1 000 g Kieselgel (Korngröße 0,04 mm bis 0,063 mm) bei einem Druck von 0,05 bis 0,1 bar unter Verwendung desselben Laufmittels wie bei der Vorreinigung aufgetragen. Nach ca. 1 200 bis 1 600 ml Vorlauf fiel das gereinigte Produkt als zweite Fraktion an. Die zweite Fraktion wurde im Vakuum eingeengt, wobei 10 bis 12 g Feststoff anfiel, der in Methanol umkristallisiert wurde.

Beispiel 2

**Herstellung von Heptakis(2,6-di-O-n-butyl,3-O-acetyl)β-cyclodextrin** (= Prod. 2)

5,8 g des nach Beispiel 1 hergestellten Heptakis (2,6-di-O-n-butyl)ß-cyclodextrins wurden in einem Zweihalskolben vorgelegt. Die Apparatur wurde evakuiert, ausgeheizt und mit Stickstoff belüftet. Unter Stickstoff wurden 5,2 ml Acetanhydrid und 20 ml getrocknetes Pyridin unter Rühren zugegeben und auf 80 °C erwärmt. Zur Vervollständigung der Reaktion wurden nach 2 Tagen weitere 2,6 ml Acetanhydrid beigegeben. Frühestens nach 4 Tagen war die Reaktion beendet. Die Vollständigkeit der Umsetzung wurde mittels Dünnschichtchromatographie kontrolliert. Als Laufmittel diente eine Mischung von Dichlormethan und tert.-Butylmethylether im Verhältnis 60 : 40. Der Rf-Wert betrug für das Produkt 0,3 und für das Edukt 0,83.

Anschließend wurde die Reaktionsmischung durch Flüssig-Flüssig-Extraktion aufgearbeitet. Dazu wurde die Reaktionslösung in 100 ml Wasser gegossen und zweimal mit je 50 ml tert.-Butylmethylether extrahiert. Die vereinigten Etherphasen wurden anschließend zweimal mit 100 ml Wasser gewaschen, mit Natriumhydrogencarbonatlösung (pH = 8,4) extrahiert, anschließend im Vakuum eingeengt. Das erhaltene Rohprodukt wurde durch Säulenchromatographie gereinigt. Dazu wurden 7 bis 8 g des Rohproduktes in Anwesenheit einer Mischung von Dichlormethan und tert. -Butylmethylether im Verhältnis 60 : 40 als Laufmittel auf eine Säule (Durchmesser 6 cm, Höhe 60 bis 70 cm), die mit 7 bis 800 g Kieselgel (Korngröße 0,04 bis 0,063 mm) beschickt war, bei einem Druck von 0,05 bis 0,1 bar aufgetragen. Nach ca. 1 000 ml Vorlauf fiel das Produkt als dritte Fraktion an, die im Vakuum getrocknet und in Methanol umkristallisiert wurde.

Beispiel 3

**Herstellung eines Phenylcarbamoylderivates von β-Cyclodextrin**

In einem Dreihalsrundkolben, ausgerüstet mit Rührer, Tropftrichter, Rückflußkühler und Thermometer, wurden 28,35 g β-Cyclodextrin in 225 g wasserfreiem Dimethylformamid bei 70 bis 80 °C unter Rühren gelöst. Nach Zugabe von 62,58 g Phenylisocyanat wurde das Reaktionsgemisch bei 100 °C bis zur vollständigen Umsetzung des Isocyanats gerührt (4 Stunden).

Das Reaktionsgemisch wurde auf Raumtemperatur abgekühlt und in 1 l Eiswasser gegossen. Der Niederschlag wurde abfiltriert, mehrfach mit Wasser gewaschen und bei 70 °C im Vakuum getrocknet.
Das Rohprodukt wurde einmal aus Isopropanol umkristallisiert.
Fp.: 210 °C; N-Gehalt: 7,34 Gew.-%; entsprechend etwa 16 Phenylcarbamoylgruppen pro β-Cyclodextrin bzw. entsprechend einem Derivatisierungsgrad von ca. 76 %.

Beispiel 4

**Trimethylsilyl-O-β-cyclodextrin**

In einem 1-l-Dreihalsrundkolben, ausgerüstet mit Rührer, Rückflußkühler, Gaseinleitungsrohr und Thermometer, wurden 29,2 g wasserfreies β-Cyclodextrin, 300 g getrocknetes Dimethylformamid und 60 g Hexamethyldisilazan unter Überleiten von Stickstoff auf 80 °C erwärmt und 4 Stunden bei dieser Temperatur gerührt. Entweichendes Ammoniak-Gas wurde in einer Vorlage mit verdünnter wäßriger Salzsäure aufgefangen. Das Reaktionsgemisch wurde im Vakuum bis zur Trockene eingeengt. Der Rückstand wurde zweimal aus Aceton umkristallisiert.
Fp.: 240 bis 242 °C; Si-Gehalt: 16,5 Gew.-% (entsprechend ca. 1,65 Trimethylsilyl-Gruppen pro Glucoseeinheit bzw. ca. 11,6 Trimethylsilylgruppen pro β-Cyclodextrineinheit bzw. einem Derivatisierungsgrad von 55 %).

**B Klebstoffzusammensetzung**

Beispiel 5

Zu handelsüblichem Ethyl-2-cyanacrylat, stabilisiert mit 20 ppm Phosphorsäure, 20 ppm $SO_2$ und 100 ppm Hydrochinon, wurden unterschiedliche Mengen an nach Beispiel 2 hergestelltem Heptakis(2,6-di-O-n-butyl,3-acetyl)β-cyclodextrin zugesetzt und durch automatisches Schütteln bei Raumtemperatur innerhalb von 24 Stunden gelöst. Bei höheren Temperaturen, die jedoch 200 °C nicht überschreiten sollten, wurde eine deutliche Verkürzung der notwendigen Lösezeit beobachtet. In Tabelle 1 sind die gefundenen Abbindezeiten für das Verkleben unterschiedlicher Prüfkörper in Abhängigkeit von der zugesetzten Cyclodextrinderivat-Menge zusammengestellt.

Tabelle 1

| Materialien/Prüfkörper | Abbindezeit [sec] | | | |
|---|---|---|---|---|
| | 0 % | +0,05 Gew.-% Prod. 2 | +0,1 Gew.-% Prod. 2 | +0,2 Gew.-% Prod. 2 |
| SBR-Gummi | 2 | 2 | 1 | 1 |
| Aluminium | 25 | 20 | 20 | 20 |
| Limba-Holz | > 120 | 30 | 20 | 10 |
| Balsa-Holz | 6 | 4 | 3 | 2 |
| Fichten-Holz | 60 | 20 | 10 | 8 |
| Buchen-Holz | 60 | 15 | 8 | 5 |
| Offsetkarton, weiß(150 g/m$^2$) | > 120 | 20 | 15 | 8 |
| Karton mit Leinenprägung (200/m$^2$) | 60 | 20 | 10 | 5 |
| Umschlagkarton, geprägt (300 g/m$^2$) | 60 | 25 | 15 | 10 |

Die Abbindezeit aller Klebstoffzusammensetzungen, auch die der folgenden Beispiele, wurde bei den Werkstoffen wie folgt ermittelt:

SBR: Eine Vollgummi-Rundschnur (Ø 15 mm) aus Styrol-Butadien-Gummi (SBR) wurde frisch geschnitten. Auf die Oberfläche wurden 1 - 2 Tropfen Klebstoff dosiert und die Gummischnurenden sofort zusammengefügt. Die Abbindezeit ist die Zeit bis zur Knickfestigkeit.

Aluminium: Es wurde die Zeit ermittelt, bei der zwei frisch gereinigte und geklebte Aluminiumhülsen (A = 0,5 cm) einen meßbaren Widerstand gegen Verschieben zeigten.

Holzmaterial: Holzstücke aus Limba, Balsa, Fichte und Buche mit den Abmessungen 100 x 25 x 10 mm wurden 10 mm überlappt verklebt. Die Zeit bis zur Anfangshaftung wurde als Abbindezeit bezeichnet.

Kartonmaterial: Die einzelnen Papiersorten wurden in ca. 10 cm lange und 1 cm breite Streifen geschnitten. Das Papier wurde mit sich selbst 1 cm überlappend verklebt, d.h. die eigentliche Klebefläche betrug 1 cm$^2$. Die verstrichene Zeit bis zum Materialausriß an der Papieroberfläche beim Auftrennen der Klebverbindung wurde als Abbindezeit gemessen.

In Tabelle 2 wird die Klebfestigkeit der mit verschiedenen Klebstoffzusammensetzungenaus unterschiedlichen Papiersorten hergestellten Klebeverbunden zusammenfassend dargestellt. Die Beurteilung der Festigkeit der Klebeverbindungen erfolgt nach einer eigens entwickelten Methode:
Plangeschliffene Stahlwürfel mit einer Kantenlänge von 1 cm wurden auf einer Stirnseite mit einem doppelseitigen Klebeband versehen. Auf das Klebeband wurden mit einem starken Kontaktdruck die einzelnen Kartonmaterialien mit einer quadratischen Fläche von 1 cm$^2$ aufgebracht. Anschließend wurden die Kartonoberflächen von 2 Stahlwürfeln mit 1 bis 2 Tropfen der Cyanacrylatklebstoffzusammensetzung verklebt. Das Würfelpaar wurde in einer Halterung eines Schlagpendelgerätes eingespannt, das in der ASTM-Norm D950 näher beschrieben ist. Angezeigt wird die benötigte Schlagarbeit des Pendel-Gewichtes pro Klebefläche zur Zerstörung der Verbindung. Die Eigenfestigkeiten der Kartonmaterialien wurden analog ermittelt, wobei jedoch natürlich auf die Cyanacrylatklebstoffzusammensetzung verzichtet wurde und stattdessen eine Verbindung durch doppelseitiges Klebeband und Kontaktdruck erfolgte. Die Eigenfestigkeiten der einzelnen Kartonmaterialien betrugen:

| | |
|---|---|
| Offsetkarton, weiß (150 g/m$^2$): | 7 N • cm/cm$^2$ |
| Karton mit Leinenprägung (200 g/m$^2$): | 8 N • cm/cm$^2$ |
| Umschlagkarton, geprägt (300 g/m$^2$): | 10 N • cm/cm$^2$ |

Tabelle 2

| Klebstoff | Kartonsorte | Abbindezeit bis zur Erzielung der Eigenfestigkeit | Festigkeit nach einer bestimmten Aushärtezeit 1) |
|---|---|---|---|
| ohne Beschleuniger | | > 180 sec | 5 N · $cm/cm^2$ |
| + 0,05 Gew.-% Prod. 2 | Offsetkarton | 80 sec | 7 N · $cm/cm^2$ |
| + 0,10 Gew.-% Prod. 2 | weiß | 30 sec | 10 N · $cm/cm^2$ (M)2) |
| + 0,20 Gew.-% Prod. 2 | (150 $g/m^2$) | 20 sec | 15 N · $cm/cm^2$ (MA)3) |
| ohne Beschleuniger | | 60 sec | 6 N · $cm/cm^2$ |
| + 0,05 Gew.-% Prod. 2 | Karton mit | 20 sec | 12 N · $cm/cm^2$ (M) |
| + 0,10 Gew.-% Prod. 2 | Leinenprägung | 15 sec | 12 N · $cm/cm^2$ (MA) |
| + 0,20 Gew.-% Prod. 2 | (200 $g/m^2$) | 10 sec | 14 N · $cm/cm^2$ (MA) |
| ohne Beschleuniger | | > 10 min | 7 N · $cm/cm^2$ (MA) |
| + 0,05 Gew.-% Prod. 2 | Umschlagkarton, | 180 sec | 15 N · $cm/cm^2$ (MA) |
| + 0,10 Gew.-% Prod. 2 | geprägt | 120 sec | 17 N · $cm/cm^2$ (MA) |
| + 0,20 Gew.-% Prod. 2 | (300 $g/m^2$) | 60 sec | 20 N · $cm/cm^2$ (MA) |

Anmerkung: 1) Die Festigkeit wurde nach folgender Aushärtezeit ermittelt:
am Offsetkarton = nach 30 sec
am Karton mit Leinenprägung = nach 20 sec
am Umschlagkarton = nach 120 sec
2) M = teilweise Materialausriß
3) MA = vollständiger Materialausriß

Zur Ermittlung der Lagerstabilität wurde die beschleunigte Alterung der beschriebenen Klebstoffzusammensetzung bei 80 °C über 5 und über 10 Tage bei einer Lagerung in Polyethylenflaschen durchgeführt. Dabei zeigte sich, daß nach Ablauf dieser Zeit, die der üblichen Lagerung bei Raumtemperatur von mindestens 1 Jahr entspricht, bei den Abbindebeschleuniger enthaltenden Klebstoffzusammensetzungen nur die übliche leichte Viskositätserhöhung beobachtet wurde. In Tabelle 3 sind die Versuchsergebnisse zur

Lagerstabilität zusammengefaßt:

Tabelle 3

| | Viskosität [mPa•s] | |
|---|---|---|
| | 5 Tage/80 °C | 10 Tage/80 °C |
| ohne Beschleuniger | 10 | 25 |
| + 0,05 Gew.-% Produkt 2 | 10 | 35 |
| + 0,10 Gew.-% Produkt 2 | 15 | 40 |
| + 0,20 Gew.-% Produkt 2 | 15 | 80 |

*Meßmethode: Brookfield LVT mit Ul-Adapter bei 20 °C

Beispiel 6

Analog Beispiel 5 wurde handelsübliches, stabilisiertes Ethyl-2-cyanacrylat mit unterschiedlichen Mengen an nach Beispiel 3 hergestelltem Phenylcarbamoylderivaten von β-Cyclodextrin vermengt. In Tabelle 4 sind die Abbindezeiten der verschiedenen Klebstoffzusammensetzungen für die Verklebung verschiedener Prüfkörper im Vergleich zu einer Ethyl-2-cyanacrylatmischung ohne Beschleuniger zusammengestellt.

Tabelle 4

| Materialien Prüfkörper | Abbindezeit [sec] | | | |
|---|---|---|---|---|
| | 0 % | 0,05 Gew.-% | 0,1 Gew.-% | 0,3 Gew.-% |
| SBR | 2 | 2 | 2 | 2 |
| Aluminium | 25 | 20 | 20 | 20 |
| Limba | > 120 | 60 | 40 | 30 |
| Balsa | 6 | 6 | 6 | 5 |
| Fichte | 60 | 50 | 30 | 15 |
| Buche | 60 | 60 | 50 | 30 |
| Offsetkarton, weiß (150 $g/m^2$) | > 120 | > 60 | > 60 | > 60 |
| Karton, mit Leinenprägung (200 $g/m^2$) | 60 | 30 | 30 | 30 |
| Umschlagkarton, geprägt (300 $g/m^2$) | 60 | 60 | 60 | 60 |

Beispiel 7

Analog Beispiel 5 wurden 2-Ethylcyanacrylat-Klebstoffmischungen hergestellt.
Als Beschleuniger wurden unterschiedliche Gewichtsmengen an acetyliertem β-Cyclodextrin zugesetzt. Die Acetylierung des β-Cyclodextrins erfolgte nach dem Literaturverfahren von D. French et. al., J. Am. Chem. Soc. 71 (1949), S. 353-356, wobei jedoch im Gegensatz dazu die Acetylierungsreaktion

a) nach 2 Stunden (Prod. 7a),

b) nach 3 Stunden (Prod. 7b) abgebrochen wurde.

Eine Analyse der acetylierten Cyclodextrine ergab für das Umsetzungsprodukt 7a) etwa 2,7 Acetylgruppen und für 7 b) etwa 2,8 Acetylgruppen pro Glucoseeinheit, was einem Derivatisierungsgrad von 90 % für 7a) und von etwa 94 % für 7b) entspricht. In Tabelle 5 sind die Abbindezeiten dieser Klebstoffzusammensetzungen aufgeführt.

Tabelle 5

| Materialien Prüfkörper | Abbindezeit [sec] | | | | |
|---|---|---|---|---|---|
| | 0 % | 0,1 Gew.-% Prod. 7a | 0,5 Gew.-% Prod. 7a | 0,1 Gew.-% Prod. 7b | 0,5 Gew.-% Prod. 7b |
| SBR | 2 | 2 | 2 | 2 | 2 |
| Aluminium | 25 | 20 | 20 | 20 | 20 |
| Limba | > 120 | 50 | 60 | 60 | 60 |
| Balsa | 6 | 5 | 3 | 5 | 3 |
| Fichte | 60 | 25 | 30 | 20 | 25 |
| Buche | 60 | 50 | 50 | 20 | 30 |
| Offsetkarton, weiß, (150 $g/m^2$) | > 120 | > 60 | > 60 | > 60 | > 60 |
| Karton, mit Leinenprägung (200 $g/m^2$) | 60 | 35 | 30 | 40 | 40 |
| Umschlagkarton, geprägt (300 $g/m^2$) | 60 | 30 | 30 | 40 | 40 |

Beispiel 8

In den 2-Ethylcyanacrylaten nach Beispiel 5 wurden durch automatisches Schütteln (1 bis 3 Tage, Raumtemperatur) 0,1 Gew.-% an Hexakis(2,6-di-O-n-butyl,3-O-acetyl)$\alpha$-cyclodextrin, hergestellt analog Beispiel 1 und Beispiel 2, unter Verwendung von $\alpha$- anstelle von $\beta$-Cyclodextrin, gelöst.

In Tabelle 6 sind die Abbindezeiten die beim Verkleben verschiedener Materialien gefunden wurden und in Tabelle 7 die Klebfestigkeit der dabei erhaltenen Klebeverbunde in Abhängigkeit von der zugesetzten Cyclodextrinderivat-Menge zusammengestellt.

Die Lagerstabilität ist vergleichbar mit den Klebstoffzusammensetzungen nach Beispiel 5.

Tabelle 6

| Materialien/Prüfkörper | Abbindezeit [sec] | | | |
|---|---|---|---|---|
| | 0 % | 0,05 Gew.-% Prod. 8 | 0,1 Gew.-% Prod. 8 | 0,2 Gew.-% Prod. 8 |
| SBR | 2 | 1 | 1 | 1 |
| Aluminium | 25 | 20 | 20 | 20 |
| Limba-Holz | > 120 | 15 | 12 | 8 |
| Balsa-Holz | 6 | 2 | 2 | 2 |
| Fichten-Holz | 60 | 15 | 10 | 5 |
| Buchen-Holz | 60 | 10 | 8 | 5 |
| Offsetkarton, weiß (150 $g/m^2$) | > 120 | 10 | 5 | 3 |
| Karton mit Leinenprägung (200 $g/m^2$) | 60 | 8 | 5 | 3 |
| Umschlagkarton geprägt (300 $g/m^2$) | 60 | 10 | 8 | 10 |

Tabelle 7

| Klebstoff | Kartonsorte | Abbindezeit [sec] | Festigkeit* [N x cm/cm$^2$] |
|---|---|---|---|
| ohne Zusatz<br>+ 0,05 Gew.-% Prod. 8<br>+ 0,10 Gew.-% Prod. 8<br>+ 0.20 Gew.-% Prod. 8 | Offsetkarton,<br>weiß<br>(150 g/m$^2$ | > 180<br>15<br>15<br>10 | 5<br>12 (MA)<br>12 (MA)<br>12 (MA) |
| ohne Zusatz<br>+ 0,05 Gew.-% Prod. 8<br>+ 0,10 Gew.-% Prod. 8<br>+ 0.20 Gew.-% Prod. 8 | Karton mit<br>Leinenprägung<br>(200 g/m$^2$) | 60<br>5<br>5<br>2 | 6<br>11 (MA)<br>12 (MA)<br>13 (MA) |
| ohne Zusatz<br>+ 0,05 Gew.-% Prod. 8<br>+ 0,10 Gew.-% Prod. 8<br>+ 0.20 Gew.-% Prod. 8 | Umschlagkarton,<br>geprägt<br>(300 g/m$^2$) | > 600<br>10<br>5<br>2 | 7<br>9 (MA)<br>11 (MA)<br>12 (MA) |

*Anmerkung: Die Festigkeit wurde analog der Anmerkung von Tabelle 2 ermittelt.

Beispiel 9

2-Ethylcyanacrylate, stabilisiert analog Beispiel 5, wurden mit unterschiedlichen Gewichtsmengen an
9a) Trimethylsilylderivat von β-Cyclodextrin, hergestellt nach Beispiel 4 (= Prod. 9a),
9b) Heptakis(2,6-di-O-methyl)β-cyclodextrin, käufliches Produkt (= Prod. 9b)
9c) Heptakis(2,3,6-tri-O-methyl)β-cyclodextrin, käufliches Produkt (Prod. 9c),
9d) Heptakis(2,6-di-O-n-butyl)β-cyclodextrin,
hergestellt nach Beispiel 1 (= Prod. 9d)
versetzt.

Im Tabelle 8 sind die Abbindezeiten der verschiedenen Klebstoffzusammensetzungen für die Verklebung verschiedener Prüfkörper zusammengestellt.

## Tabelle 8

| Materialien/ Werkstoffe | Abbindezeit in sec 0,2 Gew.-% Prod. 9a | 0,2 Gew.-% Prod. 9b | 0,2 Gew.-% Prod. 9c | 0,5 Gew.-% Prod. 9c | 0,1 Gew.-% Prod. 9d | 0,2 Gew.-% Prod. 9d |
|---|---|---|---|---|---|---|
| SBR | 1 | 1 | 1 | 1 | 1 | 1 |
| Limba | > 60 | > 60 | > 60 | 40-50 | > 60 | 40-50 |
| Balsa | 5 | 3 | 3 | 3 | 3 | 3 |
| Buche | 60 | 15 | 30 | 20 | 20-30 | 20-30 |
| Fichte | 20 | 30 | 30 | 30 | 30 | 20 |
| Offsetkarton, weiß 150 [g/m²] | > 60 | > 60 | > 60 | > 60 | > 60 | > 60 |
| Karton mit Leinenprägung 200 [g/m²] | 40 | 20 | 15-20 | 15-20 | > 60 | 30 |
| Umschlagkarton, blau, geprägt 300 [g/m²] | > 60 | 60 | 60 | > 60 | > 60 | > 60 |
| Umschlagkarton, beige | 15-20 | 30 | 15 | 10 | 25 | 20 |

## Patentansprüche

1. Klebstoffzusammensetzungen auf Basis von α-Cyanacrylaten und Abbindebeschleunigern, dadurch gekennzeichnet, daß die Klebstoffzusammensetzung in α-Cyanacrylate zumindest in Mengen von über

0,001 Gew.-% echt lösliche Hydroxylgruppen-Derivate von $\alpha$, $\beta$- und/oder $\gamma$-Cyclodextrinen enthält, und zwar in Mengen von 0,001 bis 5 Gew.-%, bezogen auf die Klebstoffzusammensetzung.

**2.** Klebstoffzusammensetzungen nach Anspruch 1, dadurch gekennzeichnet, daß sie die Cyclodextrin-Derivate wenigstens in Mengen von 0,005 Gew.-% bis 1 Gew.-% und insbesondere in Mengen von 0,03 bis 0,3 Gew.-% in $\alpha$-Cyanacrylaten echt gelöst enthalten.

**3.** Klebstoffzusammensetzungen nach einem der Ansprüche 1 bis 2, dadurch gekennzeichnet, daß sie Derivate von $\alpha$-, $\beta$- und/oder $\gamma$-Cyclodextrinen enthalten, deren Hydroxylgruppen zu einem Derivatisierungsgrad im statistischen Mittel von 25 bis 100 % und bevorzugt über 50 % umgesetzt worden sind.

**4.** Klebstoffzusammensetzung nach einem der Ansprüche 1 bis 3, dadurch gekennzeichnet, daß sie Derivate von $\alpha$-, $\beta$- und/oder $\gamma$-Cyclodextrinen enthalten, deren Hydroxylgruppen durch Veretherung, Veresterung, Silylierung und/oder Urethanbildung derivatisiert worden sind.

**5.** Klebstoffzusammensetzungen nach einem der Ansprüche 1 bis 4, dadurch gekennzeichnet, daß sie Derivate von $\alpha$-, $\beta$- und/oder $\gamma$-Cyclodextrinen der allgemeinen Formel I enthalten

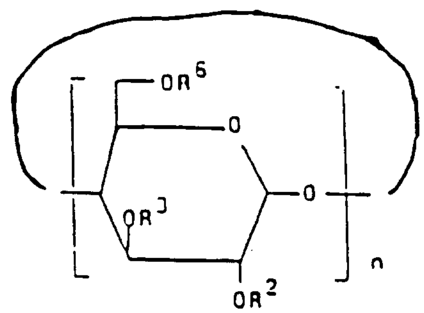

(I)

in der $R^2$, $R^3$ und $R^6$ gleich oder verschieden sind und ein Wasserstoffatom - ausgenommen Verbindungen, in der $R^2$, $R^3$ und $R^6$ Wasserstoffatome sind -, und/oder eine Alkyl- und/oder eine Alkylen- und/oder eine Cycloalkyl- und/oder eine Alkylaryl- und/oder eine Acyl- und/oder eine Trialkylsilyl- und/oder eine Urethangruppe bedeuten und n die Zahl 6, 7 oder 8 ist.

**6.** Klebstoffzusammensetzungen nach einem der Ansprüche 1 bis 5, dadurch gekennzeichnet, daß sie Derivate von $\alpha$-, $\beta$- und/oder $\gamma$-Cyclodextrinen der allgemeinen Formel I enthalten, in der $R^2$, $R^3$ und $R^6$ Wasserstoffatome - ausgenommen Verbindungen, in der $R^2$, $R^3$ und $R^6$ Wasserstoffatome sind -, und/oder eine geradkettige oder verzweigte Alkyl- und/oder Alkylengruppe mit bis zu 12 Kohlenstoffatomen und/oder eine Cycloalkyl- und/oder eine Alkylarylgruppe mit bis zu 12 Kohlenstoffatomen und/oder eine Acylgruppe -C(O)-R' und/oder eine Urethangruppe $-C(O)-NR'_2$ und/oder eine Trialkylsilylgruppe $-SiR''_3$ bedeuten, wobei R' für ein Wasserstoffatom, eine geradkettige oder verzweigte Alkyl- oder Alkylen- oder eine Cycloalkyl- oder eine Alkylarylgruppe mit bis zu 12 C-Atomen oder eine Arylgruppe, die gegebenenfalls Substituenten wie Halogene, Ether-, Ester- oder Alkoxygruppen tragen können und R'' für eine Alkylgruppe mit bis zu 6 C-Atomen steht.

**7.** Klebstoffzusammensetzungen nach einem der Ansprüche 1 bis 6, dadurch gekennzeichnet, daß sie Derivate von $\alpha$-, $\beta$- und/oder $\gamma$-Cyclodextrinen der allgemeinen Formel I enthalten, in der im statistischen Mittel zwei der Reste $R^2$, $R^3$ und $R^6$ eine Alkyl-, Alkylen- und/oder Cycloalkylgruppe und/oder Alkylarylgruppe mit bis zu 12 C-Atomen und einer der Reste $R^2$, $R^3$ und $R^6$ eine Acyl-, -C(O)-R' und/oder eine Urethangruppe $-C(O)-NR'_2$, wobei R' für ein Wasserstoffatom, eine gradkettige oder verzweigte Alkyl-, Alkylen-, Cycloalkyl- oder Alkylarylgruppe mit bis zu 12 C-Atomen oder eine Arylgruppe steht, die gegebenenfalls Halogene, Ether-, Ester- oder Alkoxygruppen als Substituenten tragen können, bedeutet.

**8.** Klebstoffzusammensetzungen nach einem der Ansprüche 1 bis 7, dadurch gekennzeichnet, daß sie Derivate von $\alpha$-, $\beta$- und/oder $\gamma$-Cyclodextrinen der allgemeinen Formel I, in der im statistischen Mittel $R^3$ oder $R^6$, vorzugsweise $R^3$ eine Acylgruppe -C(O)-R' bedeutet, wobei R' für ein Wasserstoffatom, eine geradkettige oder verzweigte Alkyl-, Alkylen-, Cycloalkyl-, Aryl- oder Alkylarylgruppe mit bis zu 12

C-Atomen steht, die ggf. Halogene, Ether, Ester oder Alkoxygruppen als Substituenten tragen können, und die übrigen Reste eine geradkettige Alkylgruppe mit bis zu 12 C-Atomen bedeuten.

9. Klebstoffzusammensetzungen nach einem der Ansprüche 1 bis 8, dadurch gekennzeichnet, daß sie übliche Zusätze wie Stabilisatoren, Farbstoffe, Verdickungsmittel, Thixotropierungsmittel und/oder weitere Beschleuniger enthalten.

10. Verfahren zur Herstellung der Klebstoffzusammensetzung nach mindestens einem der Ansprüche 1 bis 9, dadurch gekennzeichnet, daß man die im Handel erhältlichen $\alpha$-Cyanacrylate mit den Hydroxylgruppen-Derivaten von $\alpha$-, $\beta$- und/oder $\gamma$-Cyclodextrinen unter intensivem Rühren oder Schütteln vermengt.

**Claims**

1. Adhesive compositions based on $\alpha$-cyanoacrylates and setting accelerators, characterized in that the adhesive composition contains hydroxyl group derivatives of $\alpha$-, $\beta$-and/or $\gamma$-cyclodextrins genuinely soluble in $\alpha$-cyanoacrylates at least in quantities of more than 0.001% by weight, the hydroxyl group derivatives being present in quantities of 0.001 to 5% by weight, based on the adhesive composition.

2. Adhesive compositions as claimed in claim 1, characterized in that they contain the cyclodextrin derivatives genuinely dissolved in $\alpha$-cyanoacrylates at least in quantities of 0.005% by weight to 1% by weight and preferably in quantities of 0.03 to 0.3% by weight.

3. Adhesive compositions as claimed in claim 1 or 2, characterized in that they contain derivatives of $\alpha$-, $\beta$-and/or $\gamma$-cyclodextrins of which the hydroxyl groups have been reacted to a degree of derivatization of, on a statistical average, 25 to 100% and preferably more than 50%.

4. An adhesive composition as claimed in any of claims 1 to 3, characterized in that they contain derivatives of $\alpha$-, $\beta$- and/or $\gamma$-cyclodextrins of which the hydroxyl groups have been derivatized by etherification, esterification, silylation and/or urethanization.

5. Adhesive compositions as claimed in any of claims 1 to 4, characterized in that they contain derivatives of $\alpha$-, $\beta$-and/or $\gamma$-cyclodextrins corresponding to general formula I

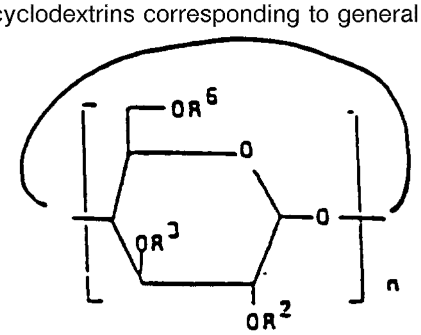

(I)

in which $R^2$, $R^3$ and $R^6$ may be the same or different and represent hydrogen - except for compounds where $R^2$, $R^3$ and $R^6$ are hydrogen atoms - and/or an alkyl group and/or an alkylene group and/or a cycloalkyl group and/or an alkylaryl group and/or an acyl group and/or a trialkylsilyl group and/or a urethane group and n is the number 6, 7 or 8.

6. Adhesive compositions as claimed in any of claims 1 to 5, characterized in that they contain derivatives of $\alpha$-, $\beta$-and/or $\gamma$-cyclodextrins corresponding to general formula I, in which the substituents $R^2$, $R^3$ and $R^6$ are hydrogen atoms - except for compounds in which $R^2$, $R^3$ and $R^6$ are hydrogen atoms - and/or a linear or branched alkyl and/or alkylene group containing up to 12 carbon atoms and/or a cycloalkyl and/or an alkylaryl group containing up to 12 carbon atoms and/or an acyl group -C(O)-R' and/or a urethane group $-C(O)-NR'_2$ and/or a trialkyl silyl group - $SiR''_3$, where R' is a hydrogen atom, a linear or branched alkyl or alkylene group or a cycloalkyl group or an alkylaryl group containing up to 12 carbon atoms or an aryl group which may optionally bear substituents, such as halogens, ether, ester or alkoxy groups, and R'' is an alkyl group containing up to 6 carbon atoms.

**7.** Adhesive compositions as claimed in any of claims 1 to 6, characterized in that they contain derivatives of $\alpha$-, $\beta$-and/or $\gamma$-cyclodextrins corresponding to general formula I, in which on a statistical average two of the substituents $R^2$, $R^3$ and $R^6$ represent an alkyl, alkylene and/or cycloalkyl group and/or alkylaryl group containing up to 12 carbon atoms and one of the substituents $R^2$, $R^3$ and $R^6$ is an acyl group, -C-(O)-R' and/or a urethane group -C(O)-NR'$_2$, where R' is a hydrogen atom, a linear or branched alkyl, alkylene, cycloalkyl or alkylaryl group containing up to 12 carbon atoms or an aryl group which may optionally bear halogens, ether, ester or alkoxy groups as substituents.

**8.** Adhesive compositions as claimed in any of claims 1 to 7, characterized in that they contain derivatives of $\alpha$-, $\beta$-and/or $\gamma$-cyclodextrins corresponding to general formula I, in which on a statistical average $R^3$ or $R^6$ and preferably $R^3$ is an acyl group -C(O)-R', where R' is a hydrogen atom, a linear or branched alkyl, alkylene, cycloalkyl, aryl or alkylaryl group containing up to 12 carbon atoms, which may optionally bear halogens, ethers, esters or alkoxy groups as substituents, and the remaining substituents represent a linear alkyl group containing up to 12 carbon atoms.

**9.** Adhesive compositions as claimed in any of claims 1 to 8, characterized in that they contain typical additives, such as stabilizers, dyes, thickeners, thixotropic agents and/or other accelerators.

**10.** A process for the production of the adhesive composition claimed in at least one of claims 1 to 9, characterized in that the commercially available $\alpha$-cyanoacrylates are intensively stirred or shaken with the hydroxyl group derivatives of $\alpha$-, $\beta$- and/or $\gamma$-cyclodextrins.

**Revendications**

**1.** Compositions de colle à base d'$\alpha$-cyanacrylates et d'accélérateurs de prise, caractérisées en ce que la composition de colle contient, dans des quantités de 0,001 à 5 % en poids, par rapport à la composition de colle, des dérivés d'$\alpha$, $\beta$ et/ou $\gamma$-cyclodextrine comportant des radicaux hydroxyle transformés, réellement solubles dans des $\alpha$-cyanacrylates au moins dans des quantités supérieures à 0,001 % en poids.

**2.** Compositions de colle selon la revendication 1, caractérisées en ce qu'elles contiennent les dérivés de cyclodextrine au moins dans des quantités de 0,005 à 1 % en poids et en particulier dans des quantités de 0,03 à 0,3 % en poids en solution dans des $\alpha$-cyanacrylates.

**3.** Compositions de colle selon l'une quelconque des revendications 1 à 2, caractérisées en ce qu'elles contiennent des dérivés d'$\alpha$, $\beta$ et/ou $\gamma$-cyclodextrine, dont les radicaux hydroxyle ont été transformés à un degré de dérivatisation en moyenne statistique de 25 à 100 % et, de préférence, de plus de 50 %.

**4.** Compositions de colle selon l'une quelconque des revendications 1 à 3, caractérisées en ce qu'elles contiennent des dérivés d'$\alpha$, $\beta$ et/ou $\gamma$-cyclodextrine, dont les radicaux hydroxyle ont été dérivatisés ou transformés par éthérification, estérification, silylation et/ou formation d'uréthane.

**5.** Compositions de colle selon l'une quelconque des revendications 1 à 4, caractérisées en ce qu'elles contiennent des dérivés d'$\alpha$, $\beta$ et/ou $\gamma$-cyclodextrine de formule générale I

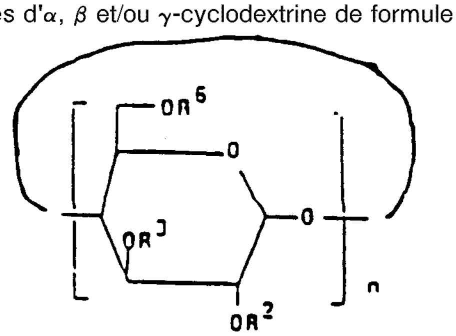

(I)

où $R^2$, $R^3$ et $R^6$ sont identiques ou différents et désignent un atome d'hydrogène - hormis les composés où $R^2$, $R^3$ et $R^6$ sont des atomes d'hydrogène - et/ou désignent un radical alkyle, et/ou alkylène, et/ou cycloalkyle et/ou alkylaryle et/ou acyle et/ou trialkylsilyle et/ou uréthane et n désigne le

chiffre 6, 7 ou 8.

6. Compositions de colle selon l'une quelconque des revendications 1 à 5, caractérisées en ce qu'elles contiennent des dérivés d'$\alpha$, $\beta$ et/ou $\gamma$-cyclodextrine de formule générale I, dans laquelle $R^2$, $R^3$ et $R^6$ désignent des atomes d'hydrogène - hormis les composés où $R^2$, $R^3$ et $R^6$ sont des atomes d'hydrogène - et/ou un radical alkyle ou alkylène à chaîne linéaire ou ramifiée avec jusqu'à 12 atomes de carbone et/ou un radical cycloalkyle et/ou alkylaryle avec jusqu'à 12 atomes de carbone et/ou un radical acyle -C(O)R' et/ou un radical uréthane $-C(O)-NR'_2$ et/ou un radical trialkylsilyle $-SiR''_3$, R' désignant un atome d'hydrogène, un radical alkyle ou alkylène ou cycloalkyle ou alkylaryle à chaîne linéaire ou ramifiée avec jusqu'à 12 atomes de carbone ou un radical aryle, qui peuvent éventuellement porter des substituants tels qu'un halogène, les radicaux éther, ester ou alcoxy, et R'' désignant un radical alkyle avec jusqu'à 6 atomes de carbone.

7. Compositions de colle selon l'une quelconque des revendications 1 à 6, caractérisées en ce qu'elles contiennent des dérivés d'$\alpha$-, $\beta$- et/ou $\gamma$-cyclodextrine de formule générale I, dans laquelle, en moyenne statistique, deux des résidus $R^2$, $R^3$ et $R^6$ désignent un radical alkyle, alkylène et/ou cycloalkyle et/ou alkylaryle avec jusqu'à 12 atomes de carbone et/ou un des résidus $R^2$, $R^3$ et $R^6$ désigne un radical acyle, -C(O)-R' et/ou uréthane $-C(O)-NR'_2$, R' désignant un atome d'hydrogène, un radical alkyle ou alkylène, cycloalkyle ou alkylaryle à chaîne linéaire ou ramifiée avec jusqu'à 12 atomes de carbone ou un radical aryle, qui peuvent éventuellement porter comme substituants un halogène, les radicaux éther, ester ou alcoxy.

8. Compositions de colle selon l'une quelconque des revendications 1 à 7, caractérisées en ce qu'elles contiennent des dérivés d'$\alpha$-, $\beta$- et/ou $\gamma$-cyclodextrine de formule générale I, dans laquelle, en moyenne statistique, le résidu $R^3$ ou $R^6$, de préférence $R^3$, est un radical acyle - C(O)-R, R' désignant un atome d'hydrogéne, un radical alkyle, alkylène, cycloalkyle, aryle ou alkylaryle à chaîne linéaire ou ramifiée avec jusqu'à 12 atomes de carbone, qui peuvent éventuellement porter comme substituants des halogènes, des radicaux éther, ester ou alcoxy, et les autres résidus désignent un radical alkyle à chaîne linéaire avec jusqu'à 12 atomes de carbone.

9. Compositions de colle selon l'une quelconque des revendications 1 à 8, caractérisées en ce qu'elles contiennent des additifs courants tels que des stabilisateurs, des colorants, des épaississants, des agents thixotropes et/ou d'autres accélérateurs.

10. Procédé de préparation de la composition de colle selon au moins l'une des revendications 1 à 9, caractérisé en ce que les $\alpha$-cyanacrylates du commerce sont mélangés avec les dérivés d'$\alpha$-, $\beta$- et/ou $\gamma$-cyclodextrine comportant des radicaux hydroxyle transformés en agitant ou en secouant intensivement.